# EUROPÄISCHE PATENTANMELDUNG

(11) **EP 1 731 352 A2**
(43) Veröffentlichungstag der Anmeldung: **13.12.2006**
(21) Anmeldenummer: 05090172.7
(22) Anmeldetag: 10.06.2005
(51) Int. Cl.: B60N 2/07

(54) **Schienenlängsführung für einen Kraftfahrzeugsitz**

(30) Priorität: 30.06.2004 DE 4010499 U
(71) Anmelder: Brose Fahrzeugteile GmbH & Co. KG, Coburg, 96450 Coburg (DE)
(72) Erfinder: Schrimpl, Bernhard, 96450 Coburg (DE)
(74) Vertreter: Baumgärtel, Gunnar

(57) **Zusammenfassung**

Die Erfindung betrifft eine Schienenlängsführung für einen Kraftfahrzeugsitz, mit einer ersten, zwischen zwei Enden längserstreckten Führungsschiene, die zur Befestigung an einer Kraftfahrzeugkarosserie vorgesehen ist, einer zweiten Führungsschiene, an der ein Kraftfahrzeugsitz befestigbar ist und die entlang der ersten Führungsschiene bewegbar geführt ist, und einem an der ersten Führungsschiene angeordneten Stützelement, an dem sich die zweite Führungsschiene in einem Teil der Einstellpositionen der beiden Führungsschienen zueinander senkrecht zur Erstreckungsrichtung der ersten Führungsschiene abstützen kann. Erfindungsgemäß ist vorgesehen, dass sich das Stützelement (3) im Wesentlichen bis zu einem Ende (11) der ersten Führungsschiene (1) erstreckt.

## Beschreibung

Die Erfindung betrifft eine Schienenlängsführung für einen Kraftfahrzeugsitz nach dem Oberbegriff des Anspruchs 1.

Eine derartige Schienenlängsführung umfasst eine zwischen zwei Enden erstreckte erste Führungsschiene, die zur Befestigung an der Karosserie eines Kraftfahrzeugs vorgesehen ist; eine längserstreckte zweite Führungsschiene, an der ein Kraftfahrzeugsitz zu befestigen ist und die entlang der Erstreckungsrichtung der ersten Führungsschiene verschiebbar geführt ist; sowie ein an der ersten Führungsschiene angeordnetes Stützelement, an dem sich die zweite Führungsschiene (während einer Bewegung entlang der ersten Führungsschiene) senkrecht zur Erstreckungsrichtung der ersten Führungsschiene abstützen kann. Bei dem Stützelement handelt es sich um ein separates Element, das an der ersten Führungsschiene befestigt ist und an dem sich die zweite Führungsschiene, z.B. mit einem Schenkel, unmittelbar oder mittelbar über ein weiteres Bauteil abstützen kann.

Eine solche Schienenlängsführung ist aus der DE 199 26 843 A1 bekannt und dient zur Einstellung der Längsposition eines Kraftfahrzeugsitzes in einem Kraftfahrzeug.

Der Erfindung liegt das Problem zu Grunde, eine Schienenlängsführung der eingangs genannten Art weiter zu verbessern.

Dieses Problem wird erfindungsgemäß durch die Schaffung einer Längsführung mit den Merkmalen des Anspruchs 1 gelöst.

Danach erstreckt sich das an der ersten, karosseriefesten Führungsschiene vorgesehene Stützelement im Wesentlichen bis zu einem stirnseitigen Ende, also dem in Längsrichtung vorderen und/oder hinteren Ende der ersten Führungsschiene. Das heißt, dass das entlang der ersten Führungsschiene erstreckte Stützelement vorzugsweise mit dem vorderen oder hinteren Ende dieser Führungsschiene abschließt oder sogar über dieses hinausragt bzw. allenfalls kurz vor dem vorderen oder hinteren Ende der ersten Führungsschiene endet. Sofern das Stützelement nicht mit einem Ende der Führungsschiene abschließt oder über dieses hinausragt, sondern vielmehr kurz vor diesem endet, soll der Abstand zwischen dem Ende des Stützelements und dem Ende der ersten Führungsschiene möglichst klein sein d.h. bevorzugt nicht größer als die Dicke des Stützelementes, die als vertikale Ausdehnung des Stützelementes quer zur Schienenlängsrichtung der Führungsschienen definiert ist.

Insofern bedeutet eine Erstreckung des Stützelementes im Wesentlichen bis zu einem stirnseitigen Ende der ersten Führungsschiene, dass das Stützelement allenfalls geringfügig vor dem entsprechenden Ende der ersten Führungsschiene endet.

Die erfindungsgemäße Anordnung des Stützelementes an der ersten Führungsschiene ermöglicht eine zusätzliche Stabilisierung der Schienenlängsführung, wenn die zweite Führungsschiene bezüglich der ersten Führungsschiene in eine Position verschoben ist, in der sie über das vordere bzw. hintere Ende der ersten Führungsschiene hinausragt. Eine solche Abstützung ist von Bedeutung, da die zweite Führungsschiene zur Aufnahme eines Kraftfahrzeugsitzes dient, auf dem ein Fahrzeuginsasse Platz nehmen kann, und auf die zweite Führungsschiene somit erhebliche Gewichtskräfte bzw. im Fahrbetrieb Trägheitskräfte wirken können, die die Tendenz haben, diese zu verbiegen bzw. zu verkippen, wenn sie über die erste Führungsschiene hinausragt und nicht vollflächig an der ersten Führungsschiene abgestützt ist.

Das erfindungsgemäße Stützelement stellt eine zusätzliche Stütze für einen Endabschnitt der zweiten Führungsschiene in einer weit nach hinten oder nach vorne verlagerten Position der zweiten Führungsschiene zur Verfügung, wobei die von der zweiten Führungsschiene auf das Stützelement ausgeübten Kräfte unmittelbar in die erste Führungsschiene abgeleitet werden können. Das Stützelement definiert also eine Stützfläche, auf der sich die zweite Führungsschiene abstützen kann und die sich bis zu einem Ende, also dem vorderen oder hinteren Ende, der Führungsschiene erstreckt.

Dabei kann ein entsprechendes Stützelement wahlweise am vorderen und/oder am hinteren Ende der ersten Führungsschiene vorgesehen sein, wobei sich das Stützelement jeweils nur am vorderen oder hinteren Endbereich der Führungsschiene erstreckt, also insbesondere nicht über den mittleren Bereich der ersten Führungsschiene oder gar über die gesamte erste Führungsschiene.

Während das Stützelement in Erstreckungsrichtung der ersten Führungsschiene mit einem ersten Ende mindestens an das zugeordnete Ende der ersten Führungsschiene heranreicht, ist es an seinem anderen, zweiten Ende, welches in Richtung auf die Mitte der Führungsschiene weist, bevorzugt keilförmig ausgebildet, so dass die zweite Führungsschiene über den keilförmigen Endabschnitt des Führungselementes auf dieses aufgleiten kann, wenn eine entsprechende Sitzlängsposition angefahren werden soll. Das heißt, das Stützelement weist an seinem der Mitte der ersten Führungsschiene zugewandten Endabschnitt eine entlang der Erstreckungsrichtung der ersten Führungsschiene und geneigt zu dieser verlaufende Schrägfläche auf, die der zweiten Führungsschiene zugewandt ist und als Führungsschräge in Form eine Aufgleitabschnittes für die zweite Führungsschiene dient.

Diese Schrägfläche geht in Erstreckungsrichtung der ersten Führungsschiene zum Ende jener Führungsschiene hin in die Stützfläche über, auf der sich die zweite Führungsschiene beim Anfahren einer entsprechenden Sitzlängsposition abstützen kann. Das heißt, die Schrägfläche und die Stützfläche des Stützelementes sind in Erstreckungsrichtung der ersten Führungsschiene derart hintereinander angeordnet, dass sie unmittelbar aneinander anschließen und ineinander übergehen.

Der Schrägfläche des Stützelementes ist an der zweiten Führungsschiene bevorzugt eine Schrägfläche in Form einer Fase zugeordnet, um das Aufgleiten der zweiten Führungsschiene auf das Stützelement zu erleichtern. Bei Erreichen einer entsprechenden Sitzlängsposition ist jene Fase der Schrägfläche des Stützelementes zugewandt und sie verläuft ebenso wie besagte Schrägfläche geneigt zur Erstreckungsrichtung der ersten Führungsschiene und entlang dieser. Die Schrägfläche des Stützelementes und die Schrägfläche (Fase) an der zweiten Führungsschiene sind demnach einander zugewandt, wenn die zweite Führungsschiene derart relativ zu der ersten Führungsschiene positioniert ist, dass beide Schrägflächen in Erstreckungsrichtung der Führungsschienen die gleiche Längsposition aufweisen.

Das Stützelement ist bevorzugt als ein aus Kunststoff bestehendes Gleitelement In Form eines Gleitkeiles mit Gleitflächen für die zweite Führungsschiene ausgebildet und kann mit einem Gleitmittel beschichtet sein. Hierzu kann an dem Stützelement mindestens eine Aufnahme für das Gleitmittel vorgesehen sein, z.B. in Form mindestens einer Nut.

Zur festen Verbindung des Stützelementes, welches ein von der ersten Führungsschiene separates Teil ist, mit der ersten Führungsschiene dienen geeignete Befestigungsmittel, wie z. B. Schrauben, Niete, eine Schweißverbindung, ein Klebemittel, Formschlusselemente (Klipse) oder dgl.

Insgesamt wird mit der erfindungsgemäßen Lösung eine Stabilisierung der Führungsschienen einer Schienenlängsführung und damit der Sitzlängsverstellung insgesamt in den Endlagen der Führungsschienen ermöglicht, und zwar unter Verwendung technisch einfach und kostengünstig umsetzbarer Maßnahmen.

Weitere Merkmale und Vorteile der Erfindung werden bei der nachfolgenden Beschreibung eines Ausführungsbeispieles anhand der Figuren deutlich werden.

Es zeigen:
Fig. 1 - einen Querschnitt durch eine Schienenlängsführung;
Fig. 2 - einen Längsschnitt durch die Schienenlängsführung aus Figur 1.

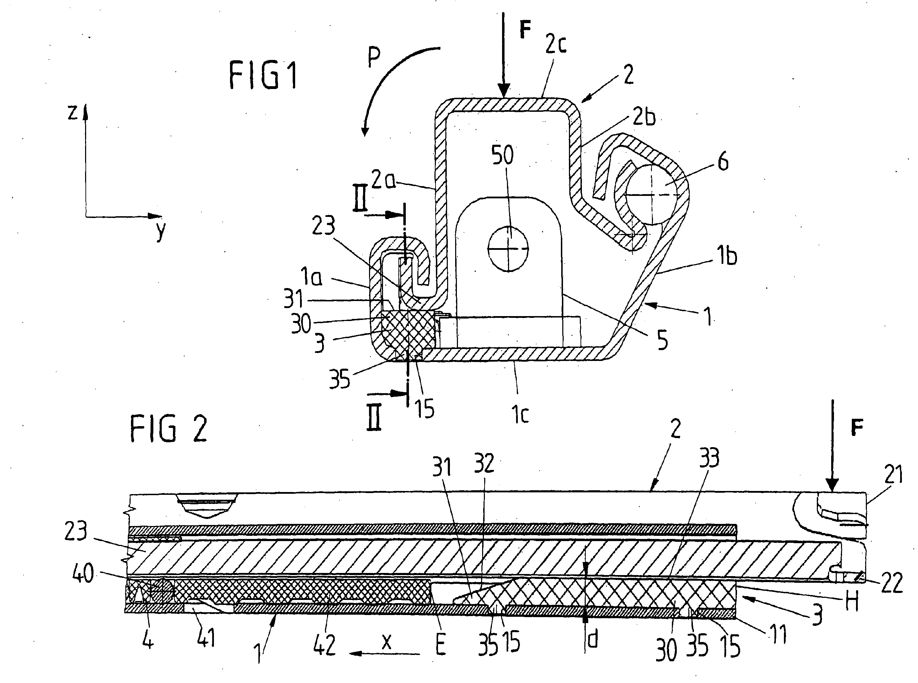

In den Figuren 1 und 2 ist in einem Querschnitt sowie einem Längsschnitt eine Schienenlängsführung (Sitzlängsführung) für einen Kraftfahrzeugsitz dargestellt, die eine mittels geeigneter Befestigungsmittel karosseriefest anzuordnende (karosserieseitige) erste längserstreckte Führungsschiene 1 sowie eine auf der ersten Führungsschiene 1 entlang deren Erstreckungsrichtung x verschieblich gelagerte, zur Aufnahme eines Fahrzeugsitzes vorgesehene (sitzseitige) zweite längserstreckte Führungsschiene 2 umfasst.

Die beiden Führungsschienen 1, 2 weisen jeweils einen Basisbereich 1 c bzw. 2c und hiervon abgewinkelte seitliche Schenkel 1a, 1b bzw. 2a, 2b auf, über die die beiden Führungsschienen 1, 2 derart ineinander greifen, dass sie entlang ihrer gemeinsamen Erstreckungsrichtung x relativ zueinander verschieblich sind. Zur Erleichterung der Verschiebbarkeit der beiden Führungsschienen 1, 2 zueinander sowie zur Gewährleistung einer definierten Führung der beiden Führungsschienen 1, 2 beim Verschieben sind in den Verhakungsbereichen, in denen die beiden Führungsschienen 1, 2 mit ihren seitlichen Schenkeln 1 a und 2a sowie 1b und 2b ineinander greifen, Gleit- und Führungsmittel 4, 6 angeordnet.

Die in einem ersten, unteren Verhakungsbereich jeweils eines Schenkels 1 a, 2a der beiden Führungsschienen 1, 2 angeordneten Führungs- und Gleitmittel umfassen einen Rollkörper 40 in Form von Kugeln lagernden Rollenkäfig 4, dem an der karosserieseitigen, ersten Führungsschiene 1 ein hinterer Anschlag 41 sowie ferner ein Abstützelement 42 in Form einer sogenannten Abstützfahne zugeordnet sind. In einem schräg gegenüberliegenden Verhakungsbereich der beiden anderen seitlichen Schenkel 1b, 2b der Führungsschienen 1, 2 sind als Führungs- und Gleitmittel Rollkörper 6 in Form von Kugeln angeordnet, über die sich die beiden Führungsschienen 1, 2 mit ihren entsprechenden Schenkeln 1b, 2b aneinander abstützen. Im Ergebnis stützen sich die beiden Führungsschienen 1, 2 über die Führungs- und Gleitmittel 40, 42, 6 entlang der Raumrichtungen y, z senkrecht zur Erstreckungsrichtung x der Führungsschienen 1, 2 derart aneinander ab, dass sie definiert und ohne Erzeugung zu großer Reibungskräfte entlang der Schienenlängsrichtung x zueinander verschoben werden können.

Derartige Schienenlängsführungen sind bekannt und werden insbesondere zur Einstellung der Sitzlängsposition von Kraftfahrzeugsitzen, also der Lage des Sitzes entlang der Fahrzeuglängsachse (parallel zur Fahrtrichtung) verwendet. Die Betätigung der Schienenlängsführung zur Einstellung der Sitzlängsposition erfolgt dabei mittels eines manuellen oder fremdkraftbetätigten (elektrischen) Antriebs 5, der innerhalb des von den beiden Führungsschienen 1, 2 umschlossenen Raumes angeordnet ist und von dem in Figur 1 beispielhaft eine Verstellspindel 50 erkennbar ist.

Bei solchen Schienenlängsführungen besteht das Problem, dass auf das hintere Ende 21 der den Fahrzeugsitz ― sowie gegebenenfalls einen hierauf befindlichen Fahrzeuginsassen ― tragenden zweiten Führungsschiene 2 erhebliche Biegekräfte F wirken können, wenn diese in ihre hinterste Position ― entsprechend der hintersten Einstellung der Sitzlängsposition des entsprechenden Fahrzeugsitzes ― gebracht ist, in der sie entlang der Erstreckungsrichtung x der Führungsschienen 1, 2 über das hintere Ende 11 der karosseriefesten ersten Führungsschiene 1 hinausragt. Diese von dem Gewicht des Fahrzeugsitzes sowie eines gegebenenfalls hierauf befindlichen Fahrzeuginsassen hervorgerufenen Kräfte F erzeugen, speziell bei stark asymmetrischer Krafteinleitung, ein Drehmoment, welches die Tendenz hat, die sitzseitige zweite Führungsschiene 2 bezüglich der ersten, karosseriefesten Führungsschiene 1 zu verkippen, was unangenehme Weichheit (Elastizität) und Geräusche aufgrund eines undefinierten Schleifens der beiden Führungsschienen 1, 2 aneinander zur Folge haben kann.

Um die Gefahr eines Verbiegens bzw. Verkippens der zweiten Führungsschiene 2 im Bereich ihres hinteren Endes 21 unter der Wirkung senkrecht zur Schienenlängsrichtung x auftretender Kräfte F zu minimieren, erstreckt sich im Bereich des hinteren Endes 11 der karosseriefesten ersten Führungsschiene 1 ein Stützelement 3 in Form eines Gleitkeiles der Dicke d (vertikale Ausdehnung senkrecht zur Schienenlängsrichtung x) in Schienenlängsrichtung x bis zu dem hinteren Ende 11 der ersten Führungsschiene 1, wo es in Schienenlängsrichtung x gemeinsam mit der ersten Führungsschiene 1 unter Bildung einer hinteren Stirnseite 11, H der ersten Führungsschiene abschließt.

Dieser Gleitkeil 3 weist einen entlang der Schienenlängsrichtung x erstreckten Grundkörper 30 auf, der auf seiner einem seitlichen Schenkel 2a der zweiten Führungsschiene 2 zugewandten Seite eine Stützfläche 33 für einen zugeordneten abgewinkelten Endabschnitt 23 jenes seitlichen Schenkels 2a bildet. Die zweite Führungsschiene 2 kann sich daher in ihren hinteren Einstellpositionen, in denen sich deren hinteres Ende 21 im Bereich des hinteren Endes 11 der ersten Führungsschiene 1 befindet, insbesondere nach hinten über dieses hinausragt, mit ihrem abgewinkelten Endabschnitt 23 des einen seitlichen Schenkels 2a an der zugeordneten, also jenem Schenkel 23 zugewandten Stützfläche 33 des Gleitkeiles 3 abstützen, wobei die in den Gleitkeil 3 eingeleiteten Kräfte unmittelbar in die Basisfläche 1 c der ersten Führungsschiene 1 abgeleitet werden können, auf der der Gleitkeil 3 aufliegt und an der er formschlüssig befestigt ist, indem nach unten abstehende Fortsätze 35 des Gleitkeiles 3 in zugeordnete Befestigungsöffnungen 15 in der Basisfläche 1 c der ersten Führungsschiene 1 eingreifen.

Durch den Gleitkeil 3 wird die freie Biegelänge, d. h. der an der zweiten Führungsschiene 2 durch das Angreifen der (speziell an den Schienenenden wirkenden) Gewichtskräfte F definierte Hebelarm reduziert, was eine entsprechende Reduzierung des durch die Gewichts- und Trägheitskräfte F hervorgerufenen, im Bereich des hinteren Endes der zweiten Führungsschiene 2 wirkenden Biege- und Drehmomentes zur Folge hat. Ohne den Gleitkeil 3 wären die Biegelänge bzw. der effektive Hebelarm im Wesentlichen durch den Abstand zwischen dem hinteren Ende 21 der zweiten Führungsschiene 2 und dem hinteren Ende E der Stützfahne 42 des Rollenkäfigs 4 gegeben. Durch den Einsatz des Gleitkeils wird diese Biegelänge bzw. der effektive Hebelarm entlang der Schienenlängsrichtung x reduziert auf den erheblich kürzeren Abstand zwischen dem hinteren Ende 21 der zweiten Führungsschiene 1 und dem hinteren Ende H des Gleitkeils 3.

Die zu verhindernde Kippbewegung der zweiten Führungsschiene 2 würde insbesondere eine Bewegung um eine Längsachse der beiden Führungsschienen 1, 2 umfassen, wie in Figur 1 anhand des Pfeiles P angedeutet. Der Gleitkeil 3 ist daher derart außermittig bezüglich der entlang der Schienenlängsrichtung x und in dem von den beiden Führungsschienen 1, 2 umschlossenen Hohlraum verlaufenden Mittelachse der beiden Führungsschienen 1, 2 angeordnet, dass er einem Verkippen der zweiten Führungsschiene 2 relativ zu der ersten Führungsschiene 1 um die Mittelachse der Führungsschienen 1, 2 entgegenwirkt.

Der Gleitkeil 3 besteht bevorzugt aus Kunststoff und weist eine hinsichtlich ihrer Reibungseigenschaften optimierte Stützfläche 33 in Form einer Gleitfläche auf, auf der die sitzseitige zweite Führungsschiene 2 (mit dem abgewinkelten Endabschnitt 23 des zugeordneten Schenkels 2a) gleiten kann, wenn sie in eine hintere Position verschoben wird, in der sie in Fahrzeuglängsrichtung x über das hintere Ende 11 der ersten Führungsschiene 1 hinausragt.

Zur Verbesserung der tribologischen Eigenschaften des Gleitkeils 3 kann dessen Stütz- und Gleitfläche 33 zusätzlich mit einem Gleitmittel versehen sein, das in entsprechenden Nuten oder sonstigen Ausnehmungen des Gleitkeils 3 aufgenommen sein kann.

Um das Aufgleiten der zweiten Führungsschiene 2 mit dem abgewinkelten Endabschnitt 23 auf die Stützfläche 33 des Gleitkeils 3 beim Anfahren einer hinteren Sitzlängsposition zu erleichtern, schließt sich an den Stütz- und Gleitabschnitt 33 des Gleitkeils 3 (in seinem dem hinteren Ende 11 der ersten Führungsschiene 1 abgewandten Endabschnitt) ein schräg zur Erstreckungsrichtung x der ersten Führungsschiene 1 verlaufender Keilabschnitt 31 mit einer Schrägfläche 32 an, dem eine entsprechende Schräge 22 in Form einer Fase am hinteren Ende 21 der zweiten Führungsschiene 2 zugeordnet ist.

Ein entsprechender Gleitkeil 3 kann auch an dem in den Figuren 1 und 2 nicht dargestellten vorderen Ende der ersten Führungsschiene 1 vorgesehen sein, um ein Verkippen und/oder Verbiegen der sitzseitigen zweiten Führungsschiene 2 in einer weit vorverlagerten Position dieser Führungsschiene zu verhindern.

Insgesamt kann durch den Gleitkeil sowohl eine kombinierte Schwenk- und Biegebewegung der sitzseitigen zweiten Führungsschiene 2 als auch gegebenenfalls eine reine Kipp- oder Biegebewegung dieser Führungsschiene 2 verhindert bzw. erheblich reduziert werden.

## Patentansprüche

1. Schienenlängsführung für einen Kraftfahrzeugsitz, mit
- einer ersten, zwischen zwei Enden längserstreckten Führungsschiene, die zur Befestigung an einer Kraftfahrzeugkarosserie vorgesehen ist,
- einer zweiten Führungsschiene, an der ein Kraftfahrzeugsitz befestigbar ist und die entlang der ersten Führungsschiene bewegbar geführt ist, und
- einem an der ersten Führungsschiene angeordneten Stützelement, an dem sich die zweite Führungsschiene in einem Teil der Einstellpositionen der beiden Führungsschienen zueinander senkrecht zur Erstreckungsrichtung der ersten Führungsschiene abstützen kann,
**dadurch gekennzeichnet,**
**dass** sich das Stützelement (3) im Wesentlichen bis zu einem Ende (11) der ersten Führungsschiene (1) erstreckt.

2. Schienenlängsführung nach Anspruch 1, **dadurch gekennzeichnet, dass** sich das Stützelement (3) bis zu einem Ende (11) der ersten Führungsschiene (1) erstreckt.

3. Schienenlängsführung nach Anspruch 1 oder 2, **dadurch gekennzeichnet, dass** das Stützelement (3) eine Stützfläche (33) aufweist, auf der sich die zweite Führungsschiene (2) abstützen kann und die sich im Wesentlichen bis zu einem Ende (11) der ersten Führungsschiene (1) erstreckt.

4. Schienenlängsführung nach einem der vorhergehenden Ansprüche, **dadurch gekennzeichnet, dass** sich das Stützelement (3) bis zu dem hinteren Ende (11) der ersten Führungsschiene (1) erstreckt.

5. Schienenlängsführung nach einem der vorhergehenden Ansprüche, **dadurch gekennzeichnet, dass** das Stützelement (3) an seinem dem zugeordneten Ende (11) der ersten Führungsschiene (1) abgewandten Endabschnitt (31) keilförmig ausgebildet ist.

6. Schienenlängsführung nach einem der vorhergehenden Ansprüche, **dadurch gekennzeichnet, dass** das Stützelement (3) an seinem dem zugeordneten Ende (11) der ersten Führungsschiene (1) abgewandten Endabschnitt (31) eine entlang der Erstreckungsrichtung (x) der ersten Führungsschiene (1) und geneigt zu dieser verlaufende Schrägfläche (32) aufweist.

7. Schienenlängsführung nach Anspruch 3 und 6, **dadurch gekennzeichnet, dass** die Schrägfläche (32) und die Stützfläche (33) entlang der Erstreckungsrichtung (x) der ersten Führungsschiene (1) hintereinander angeordnet sind.

8. Schienenlängsführung nach einem der vorhergehenden Ansprüche, **dadurch gekennzeichnet, dass** an der zweiten Führungsschiene (2) eine Schrägfläche (22) vorgesehen ist, die entlang der Erstreckungsrichtung (x) der ersten Führungsschiene (1) und geneigt zu dieser verläuft.

9. Schienenlängsführung nach Anspruch 8, **dadurch gekennzeichnet, dass** die zweite Schrägfläche (22) als Fase ausgebildet ist.

10. Schienenlängsführung nach Anspruch 6 oder 7 und Anspruch 8 oder 9, **dadurch gekennzeichnet, dass** die Schrägflächen (22, 34) an der ersten und zweiten Führungsschiene (1, 2) einander zugewandt sind, wenn die zweite Führungsschiene (2) derart relativ zu der ersten Führungsschiene (1) positioniert ist, dass die beiden Schrägflächen (22, 32) in Erstreckungsrichtung (x) der ersten Führungsschiene (1) auf gleicher Höhe liegen.

11. Schienenlängsführung nach einem der vorhergehenden Ansprüche, **dadurch gekennzeichnet, dass** das Stützelement (3) aus Kunststoff besteht.

12. Schienenlängsführung nach einem der vorhergehenden Ansprüche, **dadurch gekennzeichnet, dass** das Stützelement (3) als Gleitelement ausgebildet ist.

13. Schienenlängsführung nach Anspruch 12, **dadurch gekennzeichnet, dass** das Gleitelement (3) eine Gleitfläche (33) aufweist, auf der die zweite Führungsschiene (2) mit einem zugeordneten Abschnitt (23) gleiten kann.

14. Schienenlängsführung nach Anspruch 12 oder 13, **dadurch gekennzeichnet, dass** das Stützelement (3) mit einem Gleitmittel versehen ist.

15. Schienenlängsführung nach Anspruch 14, **dadurch gekennzeichnet, dass** das Gleitmittel in mindestens einer Ausnehmung des Stützelementes (3) gespeichert ist.

16. Schienenlängsführung nach einem der vorhergehenden Ansprüche, **dadurch gekennzeichnet, dass** das Stützelement fest mit der ersten Führungsschiene (1) verbunden ist, insbesondere durch Formschluss.

17. Schienenlängsführung nach einem der vorhergehenden Ansprüche, **dadurch gekennzeichnet, dass** das Stützelement (3) derart bezüglich einer Längsachse der Schienenlängsführung (1, 2) angeordnet ist, dass es einem Verkippen und/oder Verbiegen der zweiten Führungsschiene (2) relativ zu der ersten Führungsschiene (1) um diese Längsachse entgegenwirkt.

18. Schienenlängsführung nach Anspruch 17, **dadurch gekennzeichnet, dass** die Längsachse in Schienenlängsrichtung (x) in einem von den beiden Führungsschienen (1, 2) umschlossenen Hohlraum verläuft.
